# EUROPEAN PATENT SPECIFICATION

(11) **EP 0 635 409 B1**
(45) Date of publication and mention of the grant of the patent: **16.09.1998**
(21) Application number: 94304927.0
(22) Date of filing: 05.07.1994
(51) Int. Cl.: B60R 25/10

(54) **An automobile and an alarm system in combination**
Eine Kombination eines Kraftfahrzeugs mit einem Alarmsystem
Une automobile et un système d'alarme combiné

(30) Priority: 19.07.1993 US 95574
(43) Date of publication of application: 25.01.1995
(73) Proprietor: Lee, Ping, West Hills, California 91304 (US); Ross, George, Sherman Oaks, California 91403 (US)
(72) Inventor: Lee, Ping, West Hills, California 91304 (US); Ross, George, Sherman Oaks, California 91403 (US)
(74) Representative: Barlow, Roy James

(56) References cited:
- EP-A- 0 317 459
- DE-U- 8 712 682
- US-A- 4 928 085
- PATENT ABSTRACTS OF JAPAN vol. 10, no. 291 (M-522) 3 October 1986 & JP-A-61 105 256 (MAZDA MOTOR CORP.) 23 May 1986

## Description

### 1. FIELD OF THE INVENTION

The invention relates to a combination of an automobile and an alarm system mounted in conjunction with said automobile where the alarm system minimizes false alarms and is only activated where unauthorized access into the automobile is being attempted.

### 2. DESCRIPTION OF PRIOR ART

Electrical alarms to function as an anti-theft device are in exceedingly common usage. Such anti-theft alarms can be used to perform any of various desired functions when activated. Examples of such alarms when activated cause an annunciator to be activated with different types of annunciators being a siren, a horn and/or blinking lights. Also such alarms when activated could cause the starting circuit of the automobile to be disabled.

The common type of an alarm that has been utilized in the past uses a pressure sensor within an electronic circuit. When this pressure sensor detects a pressure change, even a minimal pressure change, the circuit is activated which will result in, for example, the automobile horn producing noise in a series of beeps or causing the lights of the automobile to blink on and off. This pressure sensor of the alarm is located within the passenger compartment of the vehicle. If the alarm is set and the door of the automobile is opened, the alarm will be activated. The alarm will also be activated if a window is broken. Actually these pressure sensors are so sensitive that if one bangs on the automobile window, the alarm will be activated. The banging on the window deflects the window sufficiently so as to change the air pressure within the passenger compartment which is detected by the pressure sensor and thereby activates the alarm.

These pressure sensors have to be set to a high degree of sensitivity in order for the alarm to function properly. However, this also means that if the entire car is subjected to a pressure change, that this pressure change will be detected by the pressure sensor. An exterior pressure change will generally result in an erroneous activation of the alarm. Typical of such pressure changes that result in erroneous activation would be when the automobile is parked within a garage and the garage door is closed which causes a sufficient change in pressure to activate the alarm. Also, if the automobile was parked within a garage, and the alarm was in a set mode, and a door is opened gaining access into the garage, that would cause a sufficient change in pressure to activate the alarm.

JP-A-61/105256 discloses an automotive alarm using an internal microphone and an external microphone to detect the noise levels inside and outside the vehicle, and works on the assumption that when the vehicle is parked, the noise level inside will normally be lower than the ambient noise level outside so no alarm will be given. However, in the event of an intrusion there will be an increase in the internal noise level, resulting from noise transferring through the intrusion access to reduce the differential between the internal and external noise levels. Decrease of this differential to less than an adjustable preset threshold triggers an alarm.

DE-G-8712682 discloses an alarm system in a building, arranged to respond to pressure changes arising inside the building as a result of opening and closing of doors and windows, and nevertheless aims to avoid being triggered by wind outside the building or through other external phenomena such as sonic boom, by arranging for no alarm signal to be emitted if an internal pressure variation coincides with an external variation.

It is desirable to include within a pressure sensitive anti-theft alarm a means which will eliminate activation of the alarm when the ambient environment surrounding the automobile is subjected to a pressure change.

### SUMMARY OF THE INVENTION

The present invention provides an alarm as defined in claim 1. The purpose of the pressure sensor is to detect changes in air pressure which would normally occur when a person attempts an unauthorized access into the passenger compartment. Typical unauthorized access would be by opening a door to the automobile or breaking a window. Upon an air pressure change being detected, the pressure sensor reacts with an annunciator, either in the form of a siren, horn and/or lights to make it be known to any individual located nearby that unauthorized access is being attempted to the particular automobile. However, these pressure sensors must be sufficiently sensitive so that even an exterior change in air pressure is detectable, such as would occur when parking of an automobile within a garage and the garage door is closed. In such an instance the activation of the automobile alarm would be in error. In order to avoid such errors in alarm activation, included within the alarm circuit is a second pressure sensor mounted on an exterior portion of the automobile such as within the engine compartment. When both pressure sensors simultaneously detect an air pressure change, the alarm is not activated. The alarm will only be activated when the interior automobile pressure sensor alone detects pressure change.

One of the primary objectives of the present invention is to construct a burglar alarm which diminishes false alarms so that, when the alarm is activated, an actual unauthorized access is being attempted.

### BRIEF DESCRIPTION OF THE DRAWINGS

Figure 1 is a diagrammatic view of a typical automobile within which has been mounted the alarm of the present invention showing the automobile being parked within a garage;
Figure 2 is a block diagram of the circuit of the alarm of the present invention; and
Figure 3 is an electrical schematic view of the block of the alarm circuit of Figure 2.

### DETAILED DESCRIPTION OF THE SHOWN EMBODIMENT

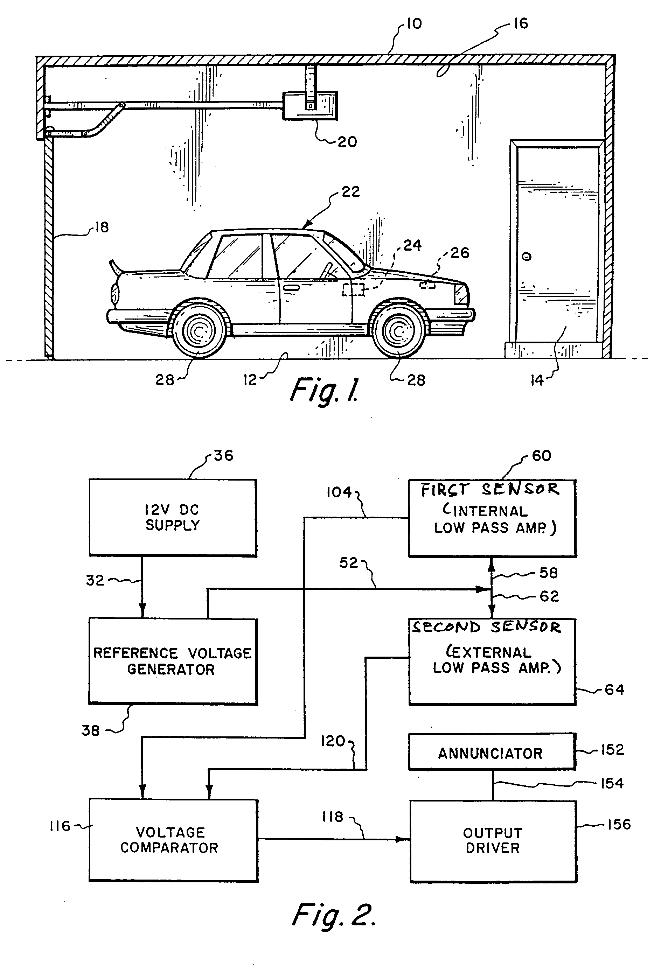

Referring particularly to the drawings, there is depicted in longitudinal cross section a typical garage 10 which has a floor 12 (fig.1). Garage 10 will normally be mounted in conjunction with a house (not shown) with an access door 14 being provided between the internal enclosure 16 of the garage 10 and the house. The internal enclosure 16 is closable by means of a garage door 18 with opening and closing movement of the garage door 18 being accomplished remotely by a garage door operating mechanism 20. An automobile 22 is locatable within the enclosure 16 and resting on the floor 12. The automobile 22 includes a passenger compartment. Mounted within this passenger compartment is an internal pressure sensor in the form of a first microphone 24 and its associated circuitry. The automobile 22 also includes an engine compartment and within this engine compartment there is located an external pressure sensor in the form of a second microphone 26 and its associated circuitry.

The microphones 24 and 26 and their associated circuitry make up the alarm of the present invention. The alarm of the present invention may be used by itself. However, the alarm of the present invention may frequently be used in conjunction with another type of alarm that is incorporated in conjunction with the automobile 22. For example, the alarm of the present invention will not be able to detect if the automobile is being jacked up and the wheels 28 being removed. Another type of alarm (not shown) will have to be used to detect that kind of unauthorized operation in conjunction with the automobile 22.

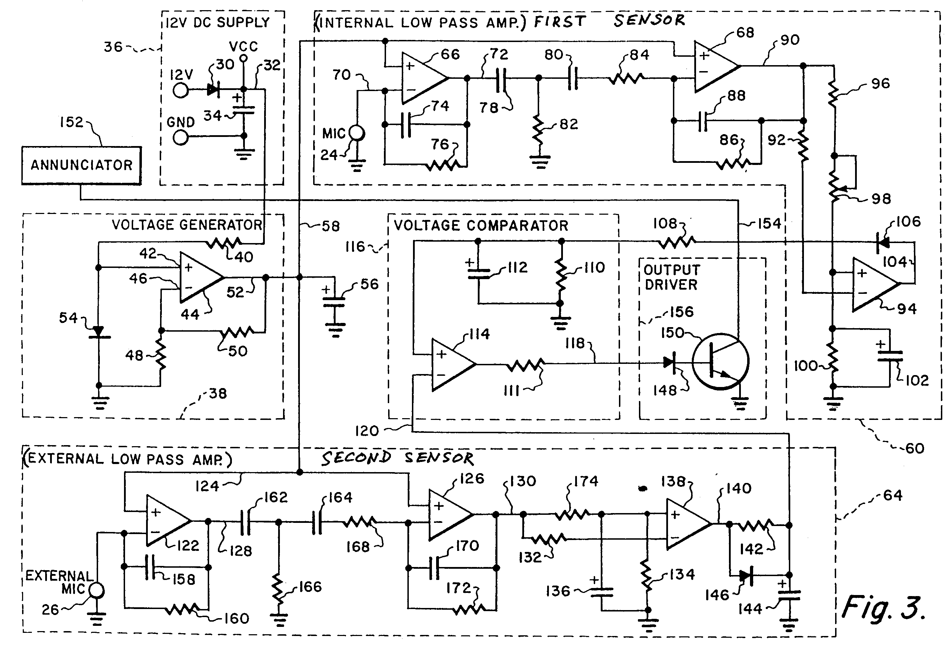

The alarm of the present invention is designed to be connected to a conventional twelve volt battery (not shown) of the automobile 22. Power from the battery is supplied through diode 30 into conductor 32 (fig.3). Conductor 32 is connected to ground through capacitor 34. The purpose of the capacitor 34 is to hold the voltage within conductor 32 to twelve volts and, even in instances where there is an excessive drain on the battery of the automobile 22, the voltage within the line 32 will be prevented from going below the twelve volts. Diode 30 and capacitor 34 are part of a 12 volt DC supply 36.

The conductor 32 connects to a reference voltage generator 38. The signal from conductor 32 is conducted through resistor 40 and to the positive terminal 42 of amplifier 44. The resistor 40 functions as a current limiting resistor to the diode 54. Diode 54 is connected between the conductor 32 and the electrical ground. About 0.6 volts is being supplied to the positive terminal 42.

The negative terminal 46 of the amplifier 44 is connected with resistors 48 and 50 through the output conductor 52 of the amplifier 44. The purpose of the capacitor 56 is to maintain the output reference voltage within the conductor 52 to be one volt.

The output reference voltage is supplied from conductor 52 into conductor 58, into a first sensor including an internal low-pass amplifier 60,
and into conductor 62 to a second sensor including an external low-pass amplifier 64. This reference voltage from conductor 58 is supplied to the positive terminal of both amplifiers 66 and 68. The microphone 24 supplies its output via a conductor 70 into the negative side of the amplifier 66. Connected between the conductor 70 and the output conductor 72 of the amplifier 66 is appropriate gain circuitry in the form of capacitor 74 and resistor 76. The output signal within conductor 72 will again be approximately one volt,
with the signal in conductor 72 being conducted through a low-pass filter formed of capacitors 78 and 80 and resistor 82. This low-pass filter passes only AC voltage changes through resistor 84 which,
in conjunction with resistor 86 and capacitor 88,
sets the gain for the second stage amplifier 68. This signal is conducted into the negative terminal of the amplifier 68 with the output conductor 90 from the amplifier 68 producing a signal in the range of five to ten volts.

The output voltage from conductor 90 is conducted through an input resistor 92 to the negative terminal of an amplifier 94. The signal from conductor 90 is also conducted through a fixed value resistor 96 and adjustable resistor 98 which controls the sensitivity of the first sensor. From the adjustable resistor 98 the signal is conducted into the positive side of the amplifier 94. The resistor 100 and capacitor 102 functions to hold the charge being supplied into the positive terminal of the amplifier 94 for a brief period of time such as one or two seconds. Also the capacitor 102 and the resistor 100 function as a noise filter.

The output of the amplifier 94 is conducted into conductor 104, through diode 106 and fixed value resistor 108 which cooperates in conjunction with resistor 110 and capacitor 112 to again hold the charge for a brief period of time. This charge is supplied to the positive terminal of amplifier 114 of a voltage comparator 116. The amplifier 114 will only produce an output signal within the conductor 118 if the positive terminal of the amplifier 114 is higher than the negative terminal of the amplifier 114. This negative terminal is connected to conductor 120. The signal within conductor 120 is responsive to the external or second microphone 26 which is included within the external low pass amplifier circuit 64.

If a pressure change is detected by the microphone 26, a signal is supplied to the negative terminal of an amplifier 122. The positive terminal of the amplifier 122 is connected by conductor 124 to the conductor 58. Conductor 124 also connects to the positive terminal of the second stage amplifier 126. If a pressure change is detected by microphone 26, a high signal is transmitted to the amplifier 122 which is also receiving a high signal on its positive terminal. This results in no output within conductor 128. Thus no output is supplied to the negative terminal of the amplifier 126. Since the amplifier 126 is receiving a high signal at the positive terminal thereof, a high signal is produced within conductor 130 which is the output of the amplifier 126. The high signal within the conductor 130 is held for a period of time by means of resistor 132, resistor 134, and capacitor 136. The resistors 132 and 134 are connected to the negative side of an amplifier 138 and because the high signal is being supplied to the positive terminal of the amplifier 138, a high signal is produced within the output conductor 140. The resistor 142 and capacitor 144 again function to hold the charge for a period of time from the output conductor 140 into the conductor 120.

The diode 146 provides for instantaneous charging of capacitor 144 rather than encountering any delay in charging by the signal being conducted through the resistor 142. The high signal within conductor 120 is higher than the high signal within conductor 104 to the positive side of the amplifier 114. This means that the same pressure change was detected simultaneously by both microphones 24 and 26. Therefore no output signal is supplied into conductor 118 and through resistor 111 and diode 148 into transistor 150. Therefore, transistor 150 is not switched to an on position and so annunciator 152 is not activated. A typical annunciator could be a sound device such as a siren or a horn, or it could be a flashing light type of annunciator. Conductor 154 connects annunciator 152 to the transistor 150. The transistor 150 and diode 148 form the output driver 156. The output driver 156 is driven by the signal within the conductor 118 from the voltage comparator 116.

Let it be assumed that a pressure change is again picked up by microphone 24, and this pressure change results in a high signal being supplied to the positive terminal of the amplifier 114. Let it further be assumed that no pressure change has been picked up by the microphone 26, which would result in a low signal to the negative terminal of the amplifier 122. Thus there is a high signal being transmitted to the negative terminal of amplifier 122 with this signal experiencing some gain established by capacitor 158 and resistor 160, this signal is conducted within conductor 128 and through the low pass filter composed of capacitors 162 and 164 and resistor 166 with this low pass filter being essentially identical to the aforementioned low pass filter composed of capacitors 78 and 80 and resistor 82. The signal is then conducted through resistor 168 which cooperates in conjunction with capacitor 170 and resistor 172 to establish the gain for the amplifier 126. However, there are now high signals being transmitted to both terminals of the amplifier 126, with the result that there is a low signal being supplied within the conductor 130 through resistor 174 to the positive terminal of the amplifier 138. The output from the amplifier 138 within conductor 140 is also low, with this low signal being supplied into conductor 120 and hence into the negative terminal of the amplifier 114. Since the signal being supplied to the positive side of the amplifier 114 is high, an output signal is supplied within conductor 118 which will cause the transistor 150 to switch to the on position. Switching of the transistor 150 will cause activation of the annunciator 152.

## Claims

1. In combination an automobile (22) having a body with a passenger compartment; and an automobile alarm system mounted in conjunction with said automobile, said automobile alarm system having a first sensor (60) including a first microphone (24) mounted within said passenger compartment, a second sensor (64) including a second microphone (26) mounted on said automobile and exteriorly of said passenger compartment, an alarm circuit (36, 38, 108, 116, 156) and an annunciator (152), said first sensor (60) and said second sensor (64) being electrically connected through said alarm circuit (36, 38, 108, 116, 156) to said annunciator (152),
**characterised in that**
said first sensor (60) and said second sensor (64) include low pass means so that said first sensor (60) and said second sensor (64) are sensitive to air pressure changes, and in that said alarm circuit (36, 38, 108, 116, 156) further has a first input terminal connected to the first sensor (60), a second input terminal connected to the second sensor (64) and an output terminal connected to said annunciator (152), whereby said annunciator (152) is not activated when both said first sensor (60) and said second sensor (64) simultaneously detect a change in air pressure, and said annunciator (152) will be activated only when said first sensor (60) detects a change in air pressure and said second sensor (64) detects no change in air pressure.

2. The combination of an automobile and an alarm system according to claim 1, **characterised in that** said second microphone (26) is mounted within the engine compartment of said automobile (22).

3. The combination of an automobile and an alarm system according to either of claims 1 and 2, **characterised in that** the sensitivity of the first sensor (60) is adjustable.

## Patentansprüche

1. Kraftfahrzeug (22) mit einer einen Fahrgastraum aufweisenden Karosserie in Verbindung mit einem Kraftfahrzeug-Alarmsystem, welches an dem Kraftfahrzeug angeordnet ist, wobei das Kraftfahrzeug-Alarmsystem einen ersten Sensor (60) mit einem ersten in dem Fahrgastraum angeordneten Mikrophon (24), einen zweiten Sensor (64) mit einem zweiten, an dem Kraftfahrzeug und außerhalb des Fahrgastraums angeordneten Mikrophon (26), eine Alarmschaltung (36, 38, 108, 116, 156) und einen Alarmgeber (152) aufweist, wobei der erste Sensor (60) und der zweite Sensor (64) elektrisch über die Alarmschaltung (36, 38, 108, 116, 156) an den Alarmgeber (152) angeschlossen ist, **dadurch gekennzeichnet**, daß der erste Sensor (60) und der zweite Sensor (64) eine Tiefpaßeinrichtung aufweisen, so daß der erste Sensor (60) und der zweite Sensor (64) empfindlich für Luftdruckänderungen sind, und daß die Alarmschaltung (36, 38, 108, 116, 156) außerdem mit einem ersten Eingangsanschluß an den ersten Sensor (60) gekoppelt ist, mit einem zweiten Eingangsanschluß an den zweiten Sensor (64) und mit einem Ausgangsanschluß an den Alarmgeber (152) gekoppelt ist, wodurch der Alarmgeber (152) dann nicht aktiviert wird, wenn sowohl der erste Sensor (60) als auch der zweite Sensor (64) gleichzeitig eine Luftdruckänderung erfassen, und der Alarmgeber (152) nur dann aktiviert wird, wenn der erste Sensor (60) eine Luftdruckänderung erfaßt und der zweite Sensor (64) keine Luftdruckänderung erfaßt.

2. Kombination aus Kraftfahrzeug und Alarmsystem nach Anspruch 1, **dadurch gekennzeichnet**, daß das zweite Mikrophon (26) innerhalb des Motorraums des Kraftfahrzeugs (22) angeordnet ist.

3. Kombination aus Kraftfahrzeug und Alarmsystem nach Anspruch 1 oder 2, **dadurch gekennzeichnet**, daß die Empfindlichkeit des ersten Sensors (60) einstellbar ist.

## Revendications

1. Combinaison, d'une automobile (22) ayant une carrosserie avec un habitacle, et d'un système d'alarme pour automobile monté en liaison avec ladite automobile, ledit système d'alarme pour automobile ayant un premier détecteur (60) comportant un premier microphone (24) monté à l'intérieur dudit habitacle, un deuxième détecteur (64) comportant un deuxième microphone (26) monté sur ladite automobile et à l'extérieur dudit habitacle, un circuit d'alarme (36, 38, 108, 116, 156) et un diffuseur (152) d'annonce, ledit premier détecteur (60) et ledit deuxième détecteur (64) étant connectés électriquement audit diffuseur (152) d'annonce par l'intermédiaire dudit circuit d'alarme (36, 38, 108, 116, 156),
caractérisée en ce que
ledit premier détecteur (60) et ledit deuxième détecteur (64) comportent un moyen passe-bas tel que ledit premier détecteur (60) et ledit deuxième détecteur (64) soient sensibles aux variations de la pression atmosphérique, et en ce que ledit circuit d'alarme (36, 38, 108, 116, 156) a en outre une première borne d'entrée reliée au premier détecteur (60), une deuxième borne d'entrée reliée au deuxième détecteur (64) et une borne de sortie reliée audit diffuseur (152) d'annonce, grâce à quoi ledit diffuseur (152) d'annonce ne se met pas en marche lorsque ledit premier détecteur (60) et ledit deuxième détecteur (64) détectent tous deux simultanément un changement dans la pression atmosphérique, et ledit diffuseur (152) d'annonce ne se met en marche que lorsque ledit premier détecteur (60) détecte un changement dans la pression atmosphérique et ledit deuxième détecteur (64) ne détecte pas de changement dans la pression atmosphérique.

2. Combinaison d'une automobile et d'un système d'alarme selon la revendication 1, caractérisée en ce que ledit deuxième microphone (26) est monté à l'intérieur du compartiment moteur de ladite automobile (22).

3. Combinaison d'une automobile et d'un système d'alarme selon l'une ou l'autre des revendications 1 et 2, caractérisée en ce que la sensibilité du premier détecteur (60) est réglable.
